**Europäisches Patentamt**

**European Patent Office**

**Office européen des brevets**

(19)

(11) Veröffentlichungsnummer: **0 082 314**
**A1**

(12) # EUROPÄISCHE PATENTANMELDUNG

(21) Anmeldenummer: **82110696.0**

(22) Anmeldetag: **19.11.82**

(51) Int. Cl.³: **C 08 J 5/12**
C 08 L 23/16
//(C08J5/12, C07C15/02, 9/14)

(30) Priorität: **17.12.81 DE 3150022**

(43) Veröffentlichungstag der Anmeldung:
**29.06.83** Patentblatt **83/26**

(84) Benannte Vertragsstaaten:
**AT BE CH DE FR GB IT LI LU NL SE**

(71) Anmelder: **DYNAMIT NOBEL AKTIENGESELLSCHAFT**
**Patentabteilung Postfach 1209**
**D-5210 Troisdorf, Bez. Köln(DE)**

(72) Erfinder: **Klaar, Karlo**
**Unterdorfstrasse 56a**
**D-5216 Niederkassel-Mondorf(DE)**

(72) Erfinder: **Kühnel, Werner**
**Ahornweg 13**
**D-5206 Neunkirchen-Seelscheid 1(DE)**

(72) Erfinder: **Pütz, Peter**
**Agnesstrasse 1**
**D-5205 St. Augustin-Menden(DE)**

(72) Erfinder: **Spielau, Paul, Dr.**
**Van-Gogh-Platz 10**
**D-5210 Troisdorf-Eschmar(DE)**

(54) **Quellschweissmittel und Verfahren zum Quellverschweissen von Kunststofformkörpern.**

(57) Quellschweißmittel zum Verschweißen von Formkörpern aus elastomeren Kunststoffen auf Basis Ethylen-Propylen-Dien-Ter-Polymeren und/oder Ethylen-Propylen-Copolymeren, enthaltend ggf. übliche Zusatzstoffe, bestehend aus einem Lösungsmittelgemisch aus 20 bis 60 Vol.-% eines aromatischen Lösungsmittels und 80 bis 40 Vol.-% eines aliphatischen Lösungsmittels mit einem Siedebereich von 60 bis 140°C.

Troisdorf, den 30. Nov. 1981
OZ 81083        MG/Bd

DYNAMIT NOBEL AKTIENGESELLSCHAFT
Troisdorf Bez. Köln

Quellschweißmittel und Verfahren zum Quellverschweißen von
Kunststofformkörpern

Die Erfindung befaßt sich mit einem Quellschweißmittel
zum Verschweißen von Formkörpern, insbesondere Flächengebilden wie Dichtungsbahnen aus Kunststoffen miteinander
enthaltend ein Lösungsmittelgemisch bzw. ein Lösungsmittelgemisch mit gelöstem Kunststoff. Das Verfahren zum
Quellverschweißen von Formkörpern insbesondere Flächengebilden wie Dichtungsbahnen für das Bauwesen aus quellverschweißbaren Kunststoffen untereinander geht davon aus,
daß man auch eine oder beide der zu verbindenden Kunststoffoberflächen ein Quellschweißmittel aufträgt, das aus
einem Lösungsmittelgemisch bzw. Lösungsmittelgemisch enthaltend gelösten Kunststoff besteht und dann die zu verbindenden Oberflächen aneinander drückt.

Das Quellschweißen ist eine Verbindungsart für zwei Teile
insbesondere auf gleicher Materialbasis, bei dem die einander zugekehrten und miteinander zu verbindenden Oberflächen mit einem leichtflüchtigen Lösungsmittel erweicht
und aufeinander gedrückt werden. Nach Verflüchtigung des

- 2 -

Lösungsmittels entsteht eine homogene Verbindung ohne stoffverschiedene Zwischenschicht. Das Quellschweißen ist bei einem großen Teil von thermoplastischen Kunststoffen anwendbar, hierzu sei beispielsweise auf das bekannte Quellverschweißen von Dichtungsbahnen aus Weich-PVC oder Polyisobutylen hingewiesen, beispielsweise beschrieben in dem Buch "Bauen mit Kunststoffen" von Hansjürgen Saechtling, Carl Hanser-Verlag München 1973, Seite 127, Seite 235 und 237 u.a. Ein spezielles Quellschweißmittel enthaltend ein Lösungsmittel bzw. Lösungsmittelgemisch sowie Kunststoffzusätze insbesondere für Polyisobutylenbahnen ist beispielsweise in der DE-AS 25 06 881 beschrieben.

Die bekannten Quellschweißmittel beipielsweise auf Basis Tetrahydrofuran für Weich-PVC oder Benzin bzw. Tetrachlorkohlenstoff bzw. Cyclohexanon für Polyisobutylen sind jedoch nicht geeignet, Formkörper auf Basis elastomerer Kunststoffe insbesondere auf Basis von Äthylen-Propylen-Dien-Terpolymeren bzw. Ethylen-Propylen-Copolymeren ausreichend homogen quellzuverschweißen. Der Erfindung liegt die Aufgabe zugrunde, ein geeignetes Quellschweißmittel und eine Verfahrenstechnik zu finden, um Formkörper auf Basis von elastomeren Kunststoffen ebenfalls durch Quellverschweißen homogen zu verbinden.

Diese Aufgabe wird erfindungsgemäß durch ein Quellschweißmittel gelöst, das dadurch gekennzeichnet ist, daß zum Quellverschweißen von elastomeren Kunststoffen auf Basis Ethylen-Propylen-Dien-Terpolymeren und/oder Ethylen-Propylen-Copolymeren enthaltend ggf. übliche Zusatzstoffe das Lösungsmittelgemisch aus 20 bis 60 Vol.-% eines aromatischen Lösungsmittels und 80 bis 40 Vol.-% eines aliphatischen Lösungsmittels mit einem Siedebereich von 60 bis 140°C besteht. Mit dem erfindungsgemäß vorgeschlagenen Quellschweißmittel gelingt es, auch bei den speziellen genannten elastomeren Kunststoffen das Quellschweißen

- 3 -

anzuwenden und homogene dichte Verbindungen bei ausreichender Anlösung nach Abdunsten des Lösungsmittels zu erzielen. Wesentlich für die Erfindung ist der Einsatz eines Lösungsmittelgemisches mit einem aliphatischen und einem aromatischen Anteil. Als aromatischer Anteil wird bevorzugt Toluol (Methylbenzol) eingesetzt. Auch Xylol ist als aromatisches Lösungsmittel denkbar, jedoch erweist sich Toluol als wirksamer. Als aliphatisches Lösungsmittel kommt insbesondere Benzin auf Basis eines Gemisches von gesättigten aliphatischen Kohlenwasserstoffen mit 5 bis 12 C-Atomen in Frage. Das Benzin kann auch noch in geringen Mengen ungesättigte naphtenische und aromatische Kohlenwasserstoffe enthalten. Ein wesentlicher Vorteil des erfindungsgemäß vorgeschlagenen Quellschweißmittels ist seine preiswerte Herstellung.

Je nach Anwendungsbereich für die Verarbeitung sind erfindungsgemäß unterschiedliche Zusammensetzungen des Lösungsmittelgemisches vorgesehen.         Beim Quellschweißen bei Temperaturen ab 15°C und darüber wird         bevorzugt ein Quellschweißmittel vorgesehen, das aus einem Lösungsmittelgemisch enthaltend 20 bis 30 Vol.-% Toluol und 80 bis 70 Vol.-% Benzin mit einem Siedebereich von 95 bis 140°C enthält. Ist man jedoch gezwungen, schon bei niedrigeren Temperaturen das Quellschweißen durchzuführen, so wird erfindungsgemäß ein Quellschweißmittel vorgeschlagen, das aus einem Lösungsmittelgemisch enthaltend 40 bis 60 Vol.-% Toluol und 60 bis 40 Vol.-% Benzin mit einem Siedebereich von 60 bis 95°C besteht, womit bereits ab 5°C und darüber gearbeitet werden kann. Für bestimmte Verbindungsbereiche von Kunststoffformkörpern, beispielsweise auch Auffüllen von Fugen oder geringeren Einsatz von Lösungsmittel kann es zweckmäßig sein, dem Lösungsmittelgemisch noch gelösten Kunststoff zuzusetzen. Eine bevorzugte Zusammensetzung eines solchen

- 4 -

Quellschweißmittels sieht vor, daß 75 bis 90 Gew.-% Lösungsmittelgemisch und 25 bis 10 Gew.-% darin gelöster elastomerer Kunststoff auf Basis von EPDM und/oder EPM ggf. enthaltend Zusatzstoffe eingesetzt wird. Man kann hierbei dem Lösungsmittelgemisch entweder nur den elastomeren Kunststoff zusetzen oder aber auch eine Kunststoffformmasse, die noch Zusatzstoffe wie Stabilisatoren, Gleitmittel, Extender, Pigmente, Ruß enthält. Jedoch ist es zweckmäßig, Füllstoffe wie Kreide, Kalkum, Kieselerde usw. nicht dem Quellschweißmittel zuzusetzen, da dies die Festigkeit der Schweißverbindung herabsetzen könnte.

Bei der Durchführung des Verfahrens zum Quellverschweißen von Formkörpern, insbesondere Flächengebilden wie Dichtungsbahnen für das Bauwesen werden erfindungsgemäß die zu verbindenden Kunststofformkörper aus EPDM und/oder EPM ggf. enthaltend Zusatzstoffe vorgesehen und mittels eines Lösungsmittelgemisches aus 20 bis 60 Vol-% eines aromatischen Lösungsmittels und 80 bis 40 Vol.-% eines aliphatischen Lösungsmittels mit einem Siedebereich von 60 bis 140°C zum Quellverschweißen eingesetzt. Das Verfahren kann gemäß dem weiteren Kennzeichen der Ansprüche 8 bis 10 durchgeführt werden.

Eine besonders vorteilhafte Ausführung der Erfindung sieht die Verwendung eines Lösungsmittelgemisches aus 20 bis 60 Vol.-% eines aromatischen Lösungsmittels, insbesondere Toluol und 80 bis 40 Vol.-% eines aliphatischen Lösungsmittels, insbesondere Benzin mit einem Siedebereich von 60 bis 140°C als Quellschweißmittel zum Verbinden von Dichtungsbahnen auf Basis von Ethylen-Propylen-Dien-Ter-Polymeren und/oder Ethylen-Propylen-Copolymeren die vulkanisationsbeschleunigerfrei ausgerüstet sind und Zusatzstoffe wie Füllstoffe, insbesondere Ruß und Kieselerde, Extender, Stabilisatoren, Alterungsschutzmittel, Gleitmittel, Verarbeitungshilfsmittel, Pigmente o.dgl.

- 5 -

enthalten durch Quellverschweißen miteinander vor.

Die Erfindung wird nachfolgend anhand eines vorteilhaften Ausführungsbeispieles erläutert, ohne sie darauf einzuschränken.

Eine bevorzugte erfindungsgemäße Ausführung eines elastomeren Kunststoffkörpers sind mehrschichtige Dichtungsbahnen, bei denen alle elastomere Kunststoffe enthaltenden Schichten vulkanisationsbeschleunigerfrei ausgeführt sind und aus einem elastomeren Kunststoff auf Basis von Ethylen-Propylen-Dien-Terpolymeren und/oder Ethylen-Propylen-Copolymeren bestehen und die zwischen den Schichten unter Anwendung von Wärme einkaschierte Verstärkungseinlage ein Gewebe, Gelege, Gewirke o.ä. aus Kunststoff- und/oder Glasfasern mit einem Flächengewicht von 20 bis 70 g/m$^2$, vorzugsweise 25 bis 50 g/m$^2$ und Zwischenräumen des Gewebes, Geleges, Gewirke o.ä. zwischen den Kett- und Schußfäden von mindestens 2,0 mm, vorzugsweise über 3 mm Abstand ist, und die Mehrschicht-Dichtungsbahn durch den Durchgriff des elastomeren Kunststoffes durch die Zwischenräume des Gewebes o.dgl. eine Trennkraft der Schichten größer 100 N/5 cm aufweist.

Diese erfindungsgemäße vorgeschlagene Dichtungsbahn verbindet in vorteilhafter Weise die Vorteile der elastomeren vulkanisierbaren, aber nicht ausvulkanisierten Kunststoffe insbesondere bezüglich der Witterungsstabilität mit den Vorteilen der thermoplastischen Kunststoffe, nämlich der Schweißbarkeit, insbesondere Quellschweißbarkeit, die mittels des erfindungsgemäß vorgeschlagenen Quellschweißmittels erreicht wird.

- 6 -

Die erfindungsgemäße mehrschichtige Dichtungsbahn kann beispielsweise in der Weise hergestellt werden, daß entsprechend den einzelnen Schichten Folien insbesondere in Dicken von 0,6 bis 0,9 mm kalandriert und diese unter Anwendung von Wärme und Druck unter Einbettung der Verstärkungseinlage zusammengewalzt bzw. kaschiert werden. Wirtschaftlich ist es hierbei, für die Außenschichten die gleiche Folie zu verwenden.

Bei einer vorteilhaften Zusammensetzung der erfindungsgemäßen Dichtungsbahn enthalten die Kunststoffschichten

| | |
|---|---|
| 35 bis 46 | Gew.-% EPDM oder EPM oder Mischungen von EPDM oder EPM |
| 40 bis 58 | Gew.-% Füllstoffe, hiervon bis zu 50 Gew.-% Ruß |
| 5 bis 12 | Gew.-% Extender |
| 10 bis 0,1 | Gew.-% Stabilisatoren und Alterungsschutzmittel |
| 5 bis 1,9 | Gew.-% Gleitmittel und Verarbeitungshilfsmittel. |

Sowohl zur wirtschaftlichen Fertigung der Dichtungsbahn, Verbesserung der Festigkeit und als Verarbeitungshilfe sind in den Schichten Füllstoffe, bevorzugt

| | |
|---|---|
| 19 bis 22 Gew.-% | Ruß, verstärkende bzw. halbverstärkende Typen |
| 26 bis 31 Gew.-% | Kieselerde (Kieselsäureanhydrid und Kaolinit mit einer Korngröße kleiner 20 $\mu$m und mindestens 40 % Anteil kleiner 2 $\mu$m) |

bezogen auf 100 Gew.-% Schicht enthalten. Die erfindungsgemäße Zusammensetzung ermöglicht eine gute Verarbeitbarkeit, insbesondere Kalandrierbarkeit.

- 7 -

Um die an eine Dichtungsbahn gestellten hohen Anforderungen bezüglich der mechanischen Eigenschaften, Kältefestigkeit, Perforationsfestigkeit auch bei höheren Temperaturen, Schrumpfarmut, Reißfestigkeit, Dehnfähigkeit und Dimensionsstabilität zu gewährleisten, werden als elastomere Kunststoffe insbesondere teilkristalline Ethylen-Propylen-Terpolymere oder teilkristalline Ethylen-Propylen-Copolymere bzw. Mischungen hiervon ausgewählt. Bevorzugt wird ein EPM mit einem Ethylen-Gehalt größer 65 Gew.-% und Propylen-Gehalt kleiner 35 Gew.-% bzw. ein EPDM mit einem Ethylen-Gehalt größer 65 Gew.-% und Propylen-Gehalt kleiner 30 Gew.-% und maximal bis zu 8 Gew.-% Dienkomponente, vorzugsweise weniger als 5 Gew.-% Dienkomponente eingesetzt. Als Dienkomponente kommt beispielsweise Ethylidennorbornen in Frage. Der Mindestgrad an Teilkristallinität der eingesetzten EPDM bzw. EPM wird nach der DSC-Methode im Differenzialabstastkalorimeter gemessenen Schmelzkurve bestimmt. Das Maximum des Schmelzpeaks, gemessen an Temperatur TS in °C nach der DSC-Kurve wird als endothermer Pik bezeichnet, der sehr eng oder aber auch einen Bereich umfassen kann. Bei Ethylen-Propylen-Terpolymeren liegt die Temperatur TS im Bereich um 50°C. Die zum Schmelzen benötigte Wärmemenge, die sogenannte Schmelzwärme $\Delta H_s$ gemessen ebenfalls nach der DSC-Methode, gibt dann Aufschluß über das Vorhandensein kristalliner Blöcke im Ethylen-Propylen-Terpolymer bzw. Ethylen-Propylen-Copolymer. Solche teilkristallinen EPDM bzw. EPM mit einer Schmelzwärme von mindestens 10 J/g werden bevorzugt eingesetzt.

Für die Auswahl geeigneter elastomerer Kunststoffe, insbesondere der EPDM und EPM ist auch die Festigkeit derselben von Bedeutung, wobei solche EPDM und EPM eingesetzt werden, die eine Reißfestigkeit gemessen nach DIN 53 455 von mindestens 5 N/mm$^2$ aufweisen.

- 8 -

Die hohe Trennfestigkeit von mindestens 100 N/5 cm der mehrschichtigen Dichtungsbahn wird insbesondere durch die Auswahl geeigneter Verstärkungseinlagen mit entsprechend großen Luftzwischenräumen zwischen den Kett- und Schußfäden erreicht, die einen ausreichenden Durchgriff der Kunststoffschichten ermöglichen und damit eine nahezu homogene Verbindung bilden. Bevorzugt werden hierbei Glas- gewebe eingesetzt, die der mehrschichtigen Dichtungsbahn eine hohe Dimensionsstabilität verleihen und das im Bau- wesen gefürchtete Schrumpfen unter Temperaturwechselbe- lastung während des Bewitterungsablaufes Sommer/Winter eindämmen.

Ebenfalls ist die Auswahl geeigneter Füllstoffe für die Kunststoffschichten und Zusatzstoffe, die synergistisch zusammenwirken und die die Eigenschaften der Dichtungsbahn, insbesondere ihre mechanischen verbessern von ausschlaggebender Bedeutung. Hierbei bilden eine wesentliche Kompo- nente halbaktive oder aktive Ruße, sogenannte verstärkende Ruße, wobei die Schichten zwischen 19 bis 25 Gew.-% vorzugsweise 19 bis 22 Gew.-% Ruße enthalten. Beispielsweise kommen nach dem Furnace-Verfahren hergestellte Ruße in Frage, die mittlere Teilchengrößen zwischen 30 und 60 nm aufweisen, eine BET-Oberfläche zwischen 30 und 60.

Als verstärkende Füllstoffe und zugleich Verbilligung des Produktes wird bevorzugt Kieselerde, das ist ein Gemisch aus Kieselsäureanhydrid und Kaolinit eingesetzt, wobei die Korngrößen kleiner 20 µm und hiervon mindestens 40 % kleiner als 2 µm sein sollten. Es ist jedoch auch möglich bis zu 2/3 des Kieselerdeanteiles durch ander Füllstoffe ebenfalls in sehr feinkörniger Form, wie Kreide, Kaolin, Talkum, Schwerspat und/oder Glasfasern bzw. Mischungen hiervon zu ersetzen.

Zusätzlich enthalten die Schichten der Dichtungsbahn Stabilisatoren und Alterungsschutzmittel insbesondere auf Basis sterisch gehinderter phenolischer Antioxydantien, phenolischer Phosphite, Thioester aliphatischer Carbonsäuren und ähnliche. Als Gleitmittel für die Verarbeitung werden insbesondere Metallseifen, beispielsweise Calziumseifen, Calziumstearat, Zinkstearat und als Verarbeitungshilfsmittel insbesondere Montansäureester, und/oder hydrierte Kohlenwasserstoffharze eingesetzt. Für die Verarbeitung von EPDM und EPM ist darüber hinaus der Einsatz von Extenderölen auf aliphatischer und/oder naphtenischer Basis erforderlich. Ein bevorzugter Aufbau der Kunststoffschichten gem. der Erfindung sieht vor, daß sie 35 bis 46 Gew.-% EPDM und/oder EPM, 31 bis 26 Gew.-% Füllstoffe wie Kreide, Kaolin, Kalkum, Schwerspat und/oder Glasfasern in Mischungen mit Kieselerde oder nur Kieselerde, 12 bis 7 Gew.-% aliphatischer und/oder naphtenische Extenderöle, 1,0 bis 0,1 Gew.-% Stabilisatoren und Alterungsschutzmittel auf Basis sterisch gehinderter phenolischer Antioxydantien, phenolischer Phosphite, Thioester aliphatischer Carbonsäuren o.dgl., 25 bis 19 Gew.-% verstärkende Ruße, 5,0 bis 0,1 Gew.-% Gleitmittel auf Basis Metallseifen, 2,3 bis 1,8 Gew.-% Verarbeitungshilfsmittel wie Montansäureester, hydrierte Kohlenwasserstoffharze enthalten. Zusätzlich kann die Dichtungsbahn noch mit weiteren üblichen Zusätzen wie Pigmenten zur Farbgebung und anderem ausgerüstet werden.

Die Eigenschaften der erfindungsgemäßen Dichtungsbahn sind allen Anforderungen im Bauwesen in hervorragender Weise angepaßt. Neben der Funktionstüchtigkeit bei Raumtemperatur ist die Funktionsfähigkeit sowohl bei tiefen Temperaturen bis -60°C als auch bei hohen Temperaturen bis etwa 100°C gegeben. Beständigkeit gegen Witterungseinflüsse und biologische Resistenz ist ebenso gegeben.

- 10 -

Darüber hinaus ist ein Anliegen der Erfindung, eine Dichtungsbahn auf Basis elastomerer Kunststoffe zu schaffen, die auch durch das bewährte Quellschweißen oder Kaltverschweißen verbunden werden kann. Die Dichtungsbahn läßt sich vorteilhaft mittels eines Quellschweißmittels auf Basis einer Mischung von Toluol und Benzin quellverschweißen, wobei bereits ab Temperaturen über 0°C insbesondere über 5°C im Freien auf der Baustelle Nahtverbindungen einwandfreier Qualität hergestellt werden können.

Nachfolgende Beispiele dienen der Erläuterung der Erfindung ohne diese einzuschränken.

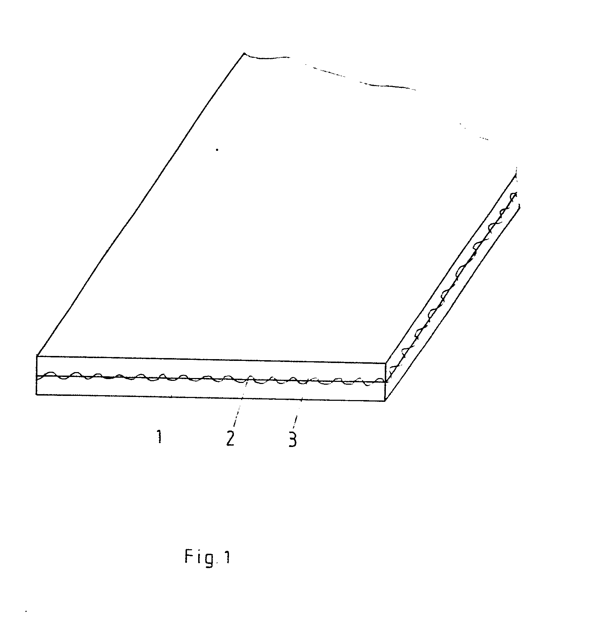

Für die mehrschichtige Dichtungsbahn gem. Fig. 1 werden für die Außenschichten 1, 3 Folien einer Dicke von 0,75 mm aus einer Materialzusammensetzung A gem. Tabelle I und für die Verstärkungseinlage 2 ein Glasgewebe mit einem Flächengewicht von 30 g/$m^2$ mit einer Schiebefestausrüstung auf Basis Vinylpropionatdispersion eingesetzt und durch Kalandrieren zu der mehrschichtigen Dichtungsbahn vereinigt.

Tabelle I

| Zusammensetzung | A (Gew.-Teile) |
|---|---|
| EPDM mit 67 Gew.-% Ethylen<br>27 Gew.-% Propylen<br>6 Gew.-% Ethylidennorbonen<br>$\Delta H_s$ 14 J/g,<br>Reißfestigkeit 11,2 N/$mm^2$ | 40,0 |
| Sillitin (Kieselerde) | 27,0 |
| Extenderöl | 8,0 |
| Kohlenwasserstoffharz | 2,0 |
| Ruß, halbaktiv | 22,5 |
| Calciumseife | 0,3 |
| Antioxydants | 0,2 |

Die hergestellte mehrschichtige Dichtungsbahn hat folgende Eigenschaften:

| Dicke | DIN 53370 | | 1,5 mm | |
|-------|-----------|--------------------|------------|---------|
| Reißkraft | DIN 53354 | längs/quer Gewebe | >400/>400 | N/5 cm |
| Reißkraft | DIN 53354 | längs/quer Folie | >450/>450 | N/5 cm |
| Reißdehnung | DIN 53354 | längs/quer Gewebe | 2/2 | % |
| Reißdehnung | DIN 53354 | längs/quer Folie | >450/>450 | % |
| spez.Gewicht | DIN 53479 | | 1270 | kg/m |
| Trennfestig-keit d. Schichten | DIN 53357 | | >100 | N/5cm |
| Maßänderung bei +80°C mit 6 Stunden | DIN 53377 | | < 0,5 | % |
| Kälteschlag-wert | VDCH 22-02 | | 218 | K |

Zum Verschweißen der Dichtungsbahnen untereinander wird als Quellschweißmittel beispielsweise eine Mischung aus 1 Volumenteil Toluol und 3 Volumenteilen Benzin mit einem Siedebereich von 100 bis 140°C verwendet. Das Verschweißen der Dichtungsbahn erfolgt hierbei bei Temperaturen ab 15°C aufwärts.

Will man die beschriebenen Dichtungsbahnen bereits bei niedrigeren Temperaturen verschweißen, so kann man beispielsweise mit einem Quellschweißmittel aus einem Volumenteil Toluol und einem Volumenteil Benzin mit einem Siedebereich von 60 bis 95°C arbeiten, wobei bereits ab Temperaturen von 5°C aufwärts im Freien gearbeitet werden kann und eine ausreichende Ablüftung und Verdunstung der Lösungsmittel möglich ist, um eine einwandfreie homogene Verbindung durch Quellverschweißen herzustellen.

- 12 -

Zum Quellverschweißen von Fugen und ggf. Absichern von Nahtverbindungen o.dgl. kann auch ein Quellschweißmittel enthaltend gelösten Kunststoff eingesetzt werden. Für die Dichtungsbahn gemäß Zusammensetzung von Tabelle I wird beispielsweise für Fugenabsicherungen ein als Flüssigfolie bezeichnetes Quellschweißmittels der folgenden Zusammensetzung benutzt:

84 Gew.-% Lösungsmittelgemisch aus 3 Volumenteilen Benzin mit Siedepunkt 100 bis 140°C und 1 Volumenteil Toluol

16 Gew.-% Kunststoffmasse aus 40 Gew.-Teilen EPDM (gemäß Tabelle I);

8 Gew.-Teile Extenderöl,

2 Gew.-Teile Kohlenwasserstoffharz,

22,5  "  halbaktiver Ruß

0,3  "  Calciumseife und

0,2  "  Antioxydants.

-1-

Troisdorf, den 30. Nov. 1981
OZ 81083      MG/Bd

Patentansprüche

1. Quellschweißmittel zum Verschweißen von Formkörpern, insbesondere Flächengebilden, wie Dichtungsbahnen aus Kunststoffen miteinander enthaltend ein Lösungsmittelgemisch bzw. ein Lösungsmittelgemisch mit gelöstem Kunststoff, d a d u r c h   g e k e n n z e i c h - n e t ,  daß zum Quellverschweißen von elastomeren Kunststoffen auf Basis Ethylen-Propylen-Dien-Ter-Polymeren und/oder Ethylenpropylen-Copolymeren enthaltend ggf. übliche Zusatzstoffe das Lösungsmittelgemisch aus 20 bis 60 Vol.-% eines aromatischen Lösungsmittels und 80 bis 40 Vol.-% eines aliphatischen Lösungsmittels mit einem Siedebereich von 60 bis 140°C besteht.

2. Quellschweißmittel nach Anspruch 1, dadurch gekennzeichnet, daß das aromatische Lösungsmittel Toluol ist.

3. Quellschweißmittel nach Anspruch 1 oder 2, dadurch gekennzeichnet, daß das aliphatische Lösungsmittel Benzin auf Basis eines Gemisches von gesättigten aliphatischen Kohlenwasserstoffen mit 5 bis 12 C-Atomen ist.

4. Quellschweißmittel nach einem der Ansprüche 1 bis 3, dadurch gekennzeichnet, daß das Lösungsmittelgemisch 20 bis 30 Vol.-% Toluol und 80 bis 70 Vol.-% Benzin mit einem Siedebereich von 95 bis 140°C enthält.

5. Quellschweißmittel nach einem der Ansprüche 1 bis 3, dadurch gekennzeichnet, daß das Lösungsmittelgemisch 40 bis 60 Vol.-% Toluol und 60 bis 40 Vol.-% Benzin mit einem Siedebereich von 60 bis 95°C enthält.

- 2 -

6. Quellschweißmittel nach einem der Ansprüche 1 bis 5, dadurch gekennzeichnet, daß 75 bis 90 Gew.-% Lösungsmittelgemisch und 25 bis 10 Gew.-% darin gelöster elastomerer Kunststoff auf Basis EPDM und/oder EPM ggf. enthaltend Zusatzstoffe enthalten sind.

7. Verfahren zum Quellverschweißen von Formkörpern, insbesondere Flächengebilden wie Dichtungsbahnen für das Bauwesen aus quellverschweißbaren Kunststoffen untereinander, bei dem man auf eine oder beide der zu verbindenden Kunststoffoberflächen ein Quellschweißmittel aufträgt, das aus einem Lösungsmittelgemisch bzw. Lösungsmittelgemisch enthaltend gelösten Kunststoff besteht und dann die zu verbindenden Oberflächen aneinander drückt, dadurch gekennzeichnet, daß die zu verbindenden Kunststofformkörper aus EPDM und/oder EPM ggf. enthaltend Zusatzstoffe bestehen und mittels eines Lösungsmittelgemisches aus 20 bis 60 Vol.-% eines aromatischen Lösungsmittels und 80 bis 40 Vol.-% eines aliphatischen Lösungsmittels mit einem Siedebereich von 60 bis 140°C miteinander quellverschweißt werden.

8. Verfahren nach Anspruch 7, dadurch gekennzeichnet, daß 75 bis 90 Gew.-% Lösungsmittelgemisch und in darin gelöster Form 25 bis 10 Gew.-% EPDM und/oder EPM enthaltend ggf. Zusatzstoffe eingesetzt wird.

9. Verfahren nach Anspruch 7 oder 8, dadurch gekennzeichnet, daß als Lösungsmittelgemisch 20 bis 30 Vol.-% Toluol und 80 bis 70 Vol.-% Benzin mit einem Siedebereich von 95 bis 140°C zum Quellverschweißen der Kunststofformkörper bei Temperaturen ab 15°C und darüber eingesetzt wird.

- 3 -

10. Verfahren nach Anspruch 7 oder 8, dadurch gekennzeichnet, daß als Lösungsmittelgemisch 40 bis 60 Vol.-% Toluol und 60 bis 40 Vol.-% Benzin mit einem Siedebereich von 60 bis 95°C zum Quellverschweißen der Kunststofformkörper bei Temperaturen ab 5°C und darüber eingesetzt wird.

11. Verwendung eines Lösungsmittelgemisches aus 20 bis 60 Vol.-% eines aromatischen Lösungsmittels, insbesondere Toluol und 80 bis 40 Vol.-% eines aliphatischen Lösungsmittels, insbesondere Benzin mit einem Siedebereich von 60 bis 140°C als Quellschweißmittel zum Verbinden von Dichtungsbahnen auf Basis von Ethylen-Propylen-Dien-Ter-Polymeren und/oder Ethylenpropylen-Copolymeren, die vulkanisationsbeschleunigerfrei ausgerüstet sind und Zusatzstoffe wie Füllstoffe, insbesondere Ruß und Kieselerde, Extender, Stabilisatoren, Alterungsschutzmittel, Gleitmittel, Verarbeitungshilfsmittel, Pigmente o.dgl. enthalten, durch Quellverschweißen miteinander.

Fig.1

## Europäisches Patentamt

## EUROPÄISCHER RECHERCHENBERICHT

| EINSCHLÄGIGE DOKUMENTE | | EP 82110696.0 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,X | DE - B2 - 2 506 881 (BE BE GE GE-SELLSCHAFT FÜR BODEN-, BAUTEN- UND UMWELTSCHUTZ MBH & KG) <br><br> * Gesamt, insbesondere Spalte 2, Zeilen 52-64 * <br><br> -- | 1-3, 7,11 | C 08 J 5/12 <br> C 08 L 23/16// <br> (C 08 J 5/12 <br> C 07 C 15/02 <br> C 07 C 9/14) |
| P,X | DE - A1 - 3 023 946 (LECHLER CHEMIE GMBH) <br><br> * Ansprüche * <br><br> -- | 1 | |
| X | OTTO JORDAN "Chemische Technologie der Lösungsmittel", 1932 <br><br> JULIUS SPRINGER, Berlin, Seite 204 <br><br> * Seite 204, Zeilen 30-39 * <br><br> -- | 1-3,5 | |
| X | "ULLMANNS ENCYKLOPÄDIE DER TECHNISCHEN CHEMIE", 3. Auflage, 17. Band, 1966 <br><br> URBAN & SCHWARZENBERG, München, Berlin, Wien, Seiten 448,449,628 <br><br> ---- | 1-5 | **RECHERCHIERTE SACHGEBIETE (Int. Cl. ³)** <br><br> C 08 J <br> C 08 L 23/00 |

Der vorliegende Recherchenbericht wurde für alle Patentansprüche erstellt

| Recherchenort | Abschlußdatum der Recherche | Prüfer |
|---|---|---|
| WIEN | 21-03-1983 | WEIGERSTORFER |